# EUROPÄISCHE PATENTSCHRIFT

(11) **EP 1 867 153 B1**
(45) Veröffentlichungstag und Bekanntmachung des Hinweises auf die Patenterteilung: **30.04.2014**
(21) Anmeldenummer: 06725342.7
(22) Anmeldetag: 28.03.2006
(51) Int. Cl.: H04N 5/76, H04N 5/00

(54) **VERFAHREN UND ANORDNUNG ZUM SPEICHERN UND WIEDERGEBEN VON TV-SENDUNGEN**
METHOD AND DEVICE FOR STORING AND PLAYING BACK TV PROGRAMMES
PROCEDE ET SYSTEME POUR STOCKER ET LIRE DES EMISSIONS TV

(30) Priorität: 30.03.2005 US 666392 P
(43) Veröffentlichungstag der Anmeldung: 19.12.2007
(73) Patentinhaber: Nokia Solutions and Networks GmbH & Co. KG, 81541 Munich (DE)
(72) Erfinder: JENZOWSKY, Stefan, 14167 Berlin (DE); SCHEUER, Axel, 80804 München (DE); STELZL, Rudolf, 85221 Dachau (DE); SCHWEICKHARDT, Harald, 81479 München (DE); HIELSCHER, Christoph, 81549 München (DE); COLES, Christopher, B., Littleton, Colorado 80127 (US)
(74) Vertreter: Weidel, Gottfried
(86) Internationale Anmeldenummer: PCT/EP2006/061078
(87) Internationale Veröffentlichungsnummer: WO 2006/103222

(56) Entgegenhaltungen:
- US-A1- 2003 188 320
- US-A1- 2003 223 733
- US-A1- 2005 002 639

## Beschreibung

Die vorliegende Erfindung betrifft ein Verfahren und eine Anordnung zum Speichern und Wiedergeben von TV-Sendungen. Insbesondere liefert die vorliegende Erfindung ein verbessertes Verfahren und eine verbesserte Anordnung für den Betrieb eines Netzwerk-PVR.

Nachdem bandbasierte analoge Videoaufzeichnungsgeräte über Jahrzehnte hinweg für Heimanwender die einzige Möglichkeit darstellten, über Antennen-, Kabel- oder Satellitenfernsehen ausgestrahlte Sendungen aufzuzeichnen und komfortabel aufzubewahren, gibt es nach dem Verfügbarwerden schneller und gleichzeitig preiswerter Videoprozessoren und leistungsfähiger Videocodecs wie etwa MPEG2 (1994) und MPEG4 (1998) seit einigen Jahren eine Reihe von meist festplattenbasierten digitalen Geräten, die neben der reinen Videoaufzeichnung eine Reihe von Komfortfunktionen bieten.

Diese neue Gerätegeneration wird häufig als persönlicher Videorekorder (PVR), mitunter auch als digitaler Videorecorder (DVR) bezeichnet. Während diese modernen Geräte natürlich auch wie klassische Geräte zum einfachen Aufzeichnen und späteren Wiedergeben von Sendungen genutzt werden können, gehen deren Fähigkeiten darüber bei weitem hinaus. Ein häufig genutztes Merkmal eines PVR ist beispielsweise das sogenannte zeitversetzte Fernsehen (Time Shifting), bei dem der Nutzer mit dem Wiedergeben einer Sendung bereits beginnt, während die Aufzeichnung noch läuft. Dank der leistungsfähigen Hardware eines modernen PVR ist die dabei erreichte Bildqualität besser als die eines herkömmlichen VHS oder SVHS Bandgeräts.

**Aus der Veröffentlichung** US 2005/002639 A1 (PUTTERMAN DANIEL ET AL) 6. Januar 2005 **(2005-01-06) ist ein PVR System bekannt, das eine Mehrzahl von Klienten mit einem oder mehreren PVR Media Servern über ein Netzwerk koppelt. Einer oder mehrere der PVR Media Server enthält Fernsehempfänger zum Empfang von Fernsehsignalen. Ein Speichermedium puffert die Fernsehsignale, um PVR- Funktionalität zu implementieren.**

**Aus der Veröffentlichung** US 2003/223733 A1 (CHANG HOSUNG) 4. Dezember 2003 **(2003-12-04) sind ein System und ein Verfahren zur Verarbeitung von Audio-/Videodaten in einem abgesetzten Überwachungssystem bekannt. Ein Nutzer kann Ereignisse und/oder Objekte in zu überwachenden Bereichen definieren. Ein Ereignisprozessor kann Ereignistexte hervorbringen, Ereignisdaten können gespeichert werden. Ein Ereignis kann assoziiert werden mit über einen bestimmten logischen oder virtuellen Kanal zur Verfügung gestellten bestimmten Audio/Videodaten. Eine Abfrage bezüglich eines Ereignisses kann vorgenommen werden über das Auffinden zugehöriger Ereignisdaten und Abruf von mit den Ereignisdaten assoziierten Audio/Videodaten.**

**Aus der Veröffentlichung** US 2003/188320 A1 (SHING HONDA) 2. Oktober 2003 **(2003-10-02) sind ein System und ein Verfahren bekannt für eine abgesetzte Anzeige und Steuerung eines Audio/Videodatenstroms von einem Erfassungsgerät. In einem Ausführungsbeispiel werden einige Komponenten eines Software Digitalen Video Recorders (DVR) auf zumindest einem Client-Gerät ausgeführt, andere auf zumindest einem Server-Gerät. Nutzer können Audio-/Videodaten eines Server-Geräts, welches ein Erfassungsgerät hat, anschauen und/oder steuern auf irgendwo befindlichen Client-Geräten, so lange sie mit dem Server-Gerät über ein Netzwerk verbunden sind.**

Das zeitversetzte Fernsehen erlaubt es dem Nutzer auch, eine zunächst live angesehen Sendung au "pausieren", etwa um einen Anruf entgegenzunehmen, und die Wiedergabe später fortzusetzen, wobei es sich für den Nutzer so darstellt, als habe er tatsächlich die Live-Ausstrahlung pausiert und später fortgesetzt. Im Hintergrund hat jedoch der Druck des Nutzers auf die "Pause"-Taste seinen PVR veranlaßt, das laufende Programm aufzuzeichnen, und der erneute Druck auf die "Pause"-Taste führt dazu, daß die aufgezeichnete Sendung einerseits weiter aufgezeichnet und andererseits bereits wiedergegeben wird.

Großer Beliebtheit erfreut sich auch die Fähigkeit eines PVR, mit minimaler Verzögerung größere Abschnitte in einer Aufzeichnung überspringen zu können. Häufig wird dies benutzt, um in der Aufzeichnung enthaltene Werbeblöcke bei der Wiedergabe zu überspringen. Um diese Fähigkeit hat sich eine Reihe von Diensten etabliert, die das Auffinden der Grenzen der Werbeblöcke erleichtern, etwa indem der Beginn und das Ende eines Werbeblocks als auf den Beginn einer Sendung bezogene Zeitpunkte als Index zur Aufzeichnung abgelegt werden und somit bei der Wiedergabe ein automatisches Überspringen der Werbung möglich wird.

Neben speziell angepaßten Unterhaltungselektronikgeräten werden zunehmend auch multimedia-fähige PCs mit geeigneter Software als PVR genutzt (bekannt als Home Theater PC, HTPC). Technisch unterscheidet sich ein spezieller PVR von einem PC-PVR kaum; beide weisen einen großen (Platten-) Speicher auf, ausreichend Prozessorleistung und geeignete Videocodecs.

Beide Plattformvarianten sind durch konfigurierbare Software bzw. Firmware in der Lage, dem Nutzer weitere Funktionen zu bieten, etwa die Suche nach Sendungen, die thematisch zu seinen Lieblingssendungen passen. Beiden Plattformvarianten ist gemein, daß die Aufzeichnung lokal beim Nutzer erfolgt und die Menge aufzeichenbarer Sendungen durch den lokalen Plattenspeicher begrenzt ist. Häufig ist es deshalb möglich, aufgezeichnete Sendungen vom internen Speicher des Geräts auf beschreibbare Medien wie (wieder)beschreibbare CD oder DVD zu transferieren. Dies ist aber mit Aufwand verbunden, und nicht zuletzt ist auch der Preis eines PVR erheblich. Und auch PVR leiden unter dem Problem, daß zum parallelen Aufzeichnen mehrer Sendungen auch mehrere PVR benötigt werden. Teurere Multituner-Geräte lösen dieses Problem nur bedingt, da stets weniger Tuner als TV Stationen vorliegen werden und außerdem die - für einen Kanal ausreichend leistungsfähige - Hardware des PVR bei der parallelen Aufzeichnung mehrerer Kanäle an ihre Grenzen stößt.

Um Nutzern alle Vorteile eines PVR bieten zu können, ohne daß diese die Investition in einen PVR tätigen müssen, wurde in dem Whitepaper "Network PVR: Everything on Demand", Jay Schiller, nCube Corporation, erhältlich im Internet unter http://www.ncube.com/pressroom/downloads/nvpr-whitepaper.pdf ein Netzwerk-PVR vorgeschlagen, bei dem Speicher, Kodierlogik und Codecs durch einen Anbieter im Kabelnetz vorgehalten werden. Der Nutzer erhält ein Gerät, mit dem er Sendungen zur Speicherung auswählen und gespeicherte Sendungen abrufen kann, die dann mittels breitbandiger Verbindung in Echtzeit an den Nutzer übertragen werden. Ein solches Gerät kann im Vergleich zu einem PVR oder einem HTPC wesentlich weniger leistungsfähig sein. Gleichzeitig kann der Nutzer praktisch unbegrenzt Speicherplatz auf dem zentralen PVR-Server mieten, während der Betreiber des PVR-Servers nur eine Kopie jeder Sendung vorhalten muß, die dann bei Bedarf an jene Nutzer verteilt wird, die diese Sendung in ihrem (virtuellen) Speicher abgelegt haben.

In einer Fortbildung kann ein solcher Netzwerk-PVR so ausgestaltet sein, daß das "Programmieren" des Netzwerk-PVR durch den Nutzer entfällt und der Nutzer statt dessen auf alle Sendungen seines Programm-Bouquets etwa der letzten 4 Wochen Zugriff hat.

Bei Lösungen, die ein Programmieren erfordern, etwa weil Rechteinhaber der pauschalen Speicherung des gesamten Programms für alle Nutzer nicht zugestimmt haben, ist es jedoch nachteilig, daß nur Nutzer, die eine Sendung programmiert haben, diese anschließend auch abrufen und wiedergeben können. Das Austauschen von Sendungen, bei Bandgeräten durch das Tauschen von Kassetten und bei den teuren Festplatten-PVR durch tauschen von CDs oder DVDs realisiert, ist beim Netzwerk-PVR nicht möglich, da die Inhalte des Nutzers im Netzwerk gespeichert sind.

Es ist daher eine Aufgabe der Erfindung, ein Verfahren und eine Anordnung zum Speichern und Wiedergeben von TV-Sendungen anzugeben, das diesen Nachteil vermeidet.

Diese Aufgabe wird gelöst durch eine Anordnung zum Speichern und Wiedergeben von TV-Sendungen, welche folgendes aufweist:
- einen PVR Server mit Mitteln zum Empfang einer Vielzahl digital kodierter TV-Kanäle, Mitteln zum Versorgen einer Vielzahl von Endgeräten sowie Mitteln zum Aufzeichnen zu speichernder TV-Sendungen;
- eine Vielzahl von Endgeräten mit Mitteln zum Auswählen zu speichernder TV-Sendungen und Mitteln zum Übertragen der Auswahl an den PVR Server;
   wobei ferner folgendes vorgesehen ist:
- eine erste Datenbank, in der für jedes Endgerät ein Index der ansprechend auf eine an diesem Endgerät getroffene Auswahl durch den PVR Server gespeicherten TV-Sendungen gespeichert ist, wobei die erste Datenbank die Zulassung oder Verweigerung der Wiedergabe gespeicherter Sendungen auf den Endgeräten steuert; und
- eine zweite Datenbank, in der für ein erstes Endgerät weitere Endgeräte vermerkt sind, welche die Berechtigung haben, durch einen Nutzer des ersten Endgeräts ausgewählte oder alle durch den Index der ersten Datenbank dem ersten Endgerät zugeordneten TV-Sendungen wiederzugeben, wobei nicht in der zweiten Datenbank vermerkte Endgeräte diese Berechtigung nicht haben.

Die Erfindung betrifft ferner ein Verfahren zum Speichern und Wiedergeben von TV-Sendungen, mit folgenden Schritten:
- Empfangen einer Vielzahl digital kodierter TV-Kanäle durch einen PVR Server, der eine Vielzahl von Endgeräten versorgt und zu speichernde TV-Sendungen aufzeichnet;
- Auswählen zu speichernder TV-Sendungen durch ein Endgerät und Übertragen der Auswahl an den PVR Server;
- Speichern eines Index für jedes Endgerät der ansprechend auf eine an diesem Endgerät getroffene Auswahl durch den PVR Server gespeicherten TV-Sendungen in einer ersten Datenbank, wobei die erste Datenbank die Zulassung oder Verweigerung der Wiedergabe gespeicherter Sendungen auf den Endgeräten steuert; und
- Vermerken weiterer Endgeräte zu einem ersten Endgerät in einer zweiten Datenbank, wobei die weiteren Endgeräte ie Berechtigung haben, durch einen Nutzer des ersten Endgeräts (ausgewählte oder alle durch den Index der ersten Datenbank dem ersten Endgerät zugeordneten TV-Sendungen wiederzugeben und wobei nicht in der zweiten Datenbank vermerkte Endgeräte diese Berechtigung nicht haben.

Das genannte Problem wird durch die Erfindung vorteilhaft gelöst, indem neben einer ersten Datenbank, die den einem Nutzer des Netzwerk-PVR zugewiesenen Speicherbereich verwaltet, eine zweite Datenbank vorgesehen wird, welche zu jedem Endgerät eine Liste weiterer Endgeräte verwaltet, die berechtigt sind, Sendungen wiederzugeben, die auf Nutzeranforderung an dem ersten Endgerät aufgezeichnet wurden. Alle Endgeräte, die nicht in dieser Liste aufgeführt sind, haben diese Berechtigung nicht.

Vorteilhaft kann vorgesehen werden, daß die ein Endgerät betreffenden Einträge in der zweiten Datenbank durch einen Nutzer des ersten Endgeräts bearbeitbar sind. Somit kann ein Nutzer etwa eine Liste von Familienangehörigen oder Freunden erstellen, die auf seine im Netzwerk-PVR gespeicherten Inhalte zugreifen dürfen. Die maximale Anzahl der durch einen Nutzer festlegbaren Familienmitglieder und Freunde kann dabei im Einklang mit urheberrechtlichen Bestimmungen beschränkt werden, etwa auf 7. Ferner kann vorgesehen werden, daß diese Familienmitglieder und Freunde die Inhalte bzw. TV-Sendungen nur wiedergeben, nicht jedoch archivieren können.

Die erste Datenbank und die zweite Datenbank können vorteilhaft in einer gemeinsamen Nutzerdatenbank zusammengefaßt werden.

Die vorliegende Erfindung kann vorteilhaft auch dann eingesetzt werden, wenn aus rechtlichen oder technischen Gründen die bei einer Aufzeichnung anfallenden Daten nicht komplett in einem dem Netzwerk-PVR zugeordneten Speicher gespeichert werden, sondern ein Teil der bei der Aufzeichnung zu speichernden Daten an einen Speicher des auswählenden Endgeräts gesendet wird. Dies kann erforderlich sein, wenn dem Nutzer eine Intro-Funktion ohne Netzwerkverbindung ermöglicht werden soll, oder wenn Rechteinhaber das Anlegen eigenständig brauchbarer Kopien durch Betreiber von Netzwerk-PVRs nicht gestatten. Im letzteren Fall wird die Aufteilung der Daten so vorgenommen, daß ein kleiner Teil der Daten im Endgerät gespeichert wird, und der verbleibende, überwiegende Teil der Daten, der im Speicher des Netzwerk-PVR abgelegt wird, für sich genommen keinen dekodierbaren Inhalt (Bild und/oder Ton) ergibt.

Um den Nutzern auch in diesem Fall das Austauschen ihrer aufgezeichneten Sendungen zu ermöglichen, können die einer Aufzeichnung zugeordneten lokalen Daten entweder über das Netzwerk oder mittels Datenträger zwischen den Nutzern ausgetauscht werden. Werden Datenträger zugelassen, übernimmt die zweite Datenbank dann die beispielsweise Funktion des Überwachens und Beschränkens der Zahl insgesamt angefertigten Kopien.

Im folgenden werden bevorzugte Ausführungsbeispiele der vorliegenden Erfindung im Zusammenhang mit einer Zeichnung näher erläutert.

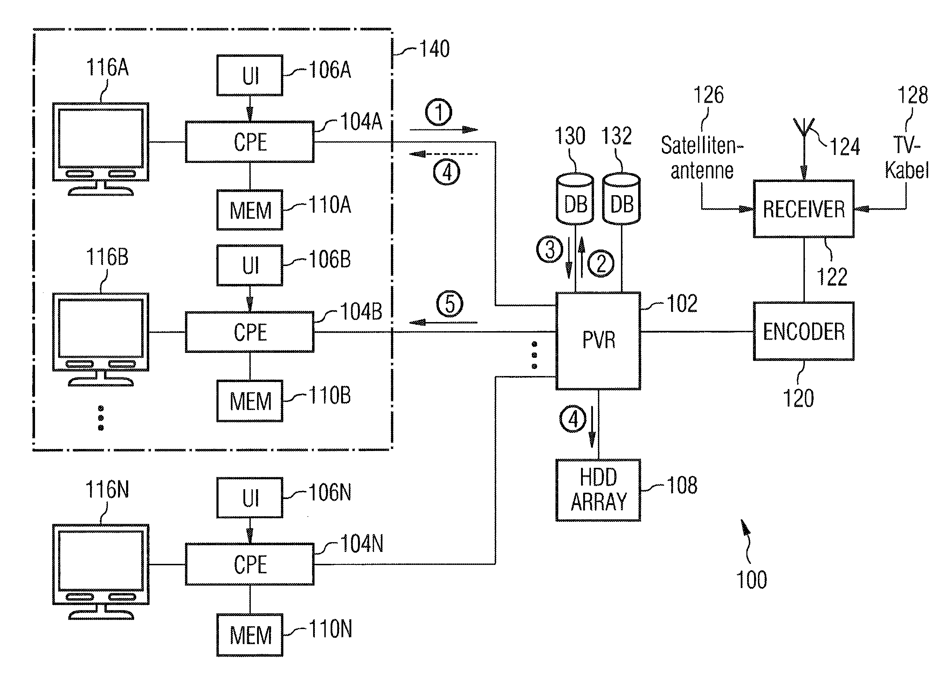

Die einzige Figur zeigt eine Anordnung 100 mit einem Netzwerk-PVR bzw. PVR Server 102 und von diesem versorgten Endgeräten 104A..104N. Der PVR Server 102 empfängt von einem Encoder 120 digital kodierte TV-Kanäle. Der Encoder wiederum empfängt die TV-Kanäle von einem Receiver 122, welcher über terrestrische Antenne 124 und/oder Satellitenantenne 126 und/oder TV-Kabel 128 geeignete TV-Signale empfängt. Der Encoder 120 und der Receiver 122 können dabei als ein Gerät konstruiert sein. Der Encoder 120 nutzt einen Codec wie etwa MPEG2 oder MPEG4 oder davon abgeleitete Codecs, um die zunächst in analoger Form vorliegenden TV-Signale in ein effizientes digitales Datenformat zu überführen. Liegt ein TV-Kanal bereits als digitaler Datenstrom vor, beispielsweise als Digital Video Broadcast DVB (terrestrisch als DVB-T, via Kabel als DVB-C oder via Satellit als DVB-S empfangen), kann der Encoder 120 diesen Datenstrom unmodifiziert an den PVR Server 102 weiterleiten oder vor Weiterleitung modifizieren, beispielsweise durch Anpassen der Bandbreite des Datenstroms an die Bandbreite der Verbindung zu den Endgeräten 104.

Der PVR Server ist mit einem Massenspeicher 108 gekoppelt, beispielsweise mit einem Festplatten-Array bzw. HDD Array. In der Technik sind zahlreiche Methoden bekannt, aus Festplatten redundante Massenspeicher-Arrays aufzubauen, die beim Ausfall einzelner Festplatten dennoch die gespeicherten Daten vollständig ausliefern können. Der Einsatz eines solchen redundanten Arrays, z.B. eines redundanten Arrays aus unabhängigen Festplatten (RAID), ist im Zusammenhang mit der vorliegenden Erfindung von Vorteil, da ein PVR Server 102 und der angeschlossene Massenspeicher 108 sämtliche oder zumindest einen großen Anteil an den Daten der TV-Aufzeichnungen zahlreicher Nutzer speichert.

Die Nutzer-Endgeräte 104 sind mit dem PVR Server 102 beispielsweise über das TV-Kabelnetz oder über eine DSL-Verbindung verbunden. Moderne Codecs erlauben eine akzeptable Videoqualität mit Übertragungsraten ab wenigen hundert kbit/s. Mit den technisch über DSL-Verbindungen möglichen Bandbreiten von mehreren Mbit/s sind zwei oder mehr parallele Videoströme (für verschiedene Wiedergabegeräte im Haushalt des Nutzers) oder ein einzelner Videostrom mit hoher Qualität denkbar.

Die Endgeräte 104 sind ausgestattet oder gekoppelt mit lokalem Speicher 110, der beispielsweise als herkömmliche Festplatte und/oder als Flash-Speicher und/oder als RAM ausgebildet sein kann. Natürlich sind auch Sonderformen wie im Flash-Speicherkartenformat vorliegende Kleinstfestplatten denkbar. Flash-Speicher hat dabei den Vorteil, daß eine Speicherung der Daten unabhängig vom Anliegen einer Versorgungsspannung möglich ist und gleichzeitig besonders leise Endgeräte 104 ermöglicht werden, da Flash-Speicher keine rotierenden oder andere mechanische Teile aufweist.

Der Speicher 110 kann dabei fest mit dem Endgerät 104 gekoppelt oder auswechselbar gestaltet sein. An den Speicher 110 der Endgeräte 104 bestehen geringere Anforderungen als an den Massenspeicher 108 hinsichtlich Redundanz und Ausfallsicherheit. Als Komfortmerkmal für den Nutzer kann vorgesehen werden, daß der Nutzer Sicherheitskopien der fallweise in seinem Speicher abgelegten Teile der Aufzeichnungen anfertigen kann, etwa auf einen nicht permanent im Endgerät 104 befindlichen Datenträger (beschreibbare CD oder DVD, externe Festplatte), über Netzwerkverbindung auf einem PC oder auch in einem gesonderten Speicherbereich beim PVR Diensteanbieter (nicht dargestellt). Ferner kann vorgesehen werden, daß der Nutzer neben diesen Sicherheitskopien auch Kopien zur Weitergabe der fallweise in seinem Speicher abgelegten Teile der Aufzeichnungen an andere Nutzer, beispielsweise an Freunde, erstellen kann.

Bei dem Endgerät bzw. CPE 104 kann es sich um eine Set-Top-Box handeln, die an ein Bildwiedergabegerät 116 angeschlossen wird. Alternativ kann das Endgerät 104 in das Bildwiedergabegerät 116 integriert sein. Das Bildwiedergabegerät 116 kann ein herkömmlicher Fernseher sein. Alternativ kann es sich um einen Monitor handeln, der selbst keinen TV-Tuner aufweist. Das Endgerät 104 weist eine Benutzerschnittstelle 106 auf, die dem Nutzer beispielsweise dazu dient, sein Archiv aufgezeichneter TV-Sendungen zu verwalten, die Liste mit Nutzern zu verwalten, die auf sein Archiv Zugriff haben usw. Diese Benutzerschnittstelle kann, wie auf dem Gebiet der Set-Top-Boxen üblich, so realisiert sein, daß der Nutzer Eingaben über eine Fernbedienung macht und Ausgaben über das Bildwiedergabegerät 116 angezeigt bekommt.

Hat der Nutzer eines ersten Endgeräts 104A eine TV-Sendung ausgewählt, wird ein Datensatz, der eine aufzuzeichnende TV-Sendung kennzeichnet, an den netzbasierten PVR 102 gesendet (Schritt 1), der mittels eines Schedulers die TV-Sendung zur Aufnahme vorsieht. Eine erste Datenbank 130, beispielsweise eine Nutzerdatenbank, verwaltet die von einem Nutzer zur Aufnahme vorgesehenen Sendungen und prüft Berechtigungen des Nutzers, etwa ob der Nutzer den entsprechenden TV-Kärial abonniert hat (Schritt 2).

Wird eine TV-Sendung ausgestrahlt, prüft der PVR Server 102 in Zusammenwirken mit der Datenbank 130, ob ein (es genügt ein einziger) Nutzer diese Sendung zur Aufnahme vorgesehen hat (Schritt 3). Ist dies der Fall, wird die Aufnahme vorgenommen (Schritt 4). Dabei können die bei der Aufzeichnung anfallenden Daten vollständig im Speicher 108 des PVR Servers abgelegt werden oder in einen lokalen und einen zentralen Teil aufgeteilt und entsprechend im Speicher 110 des Endgeräts 104 oder im Massenspeicher 108 abgelegt werden. Falls an mehreren Endgeräten 104 die Sendung zur Aufnahme programmiert wurde, kann entweder eine gemeinsame Kopie vorgesehen werden, die vollständig bzw. deren zentraler Anteil im Speicher 108 des PVR Servers 102 abgelegt wird, oder für jedes Endgerät wird eine gesonderte Kopie erstellt. In der ersten Datenbank 130 wird anschließend für jedes Endgerät, welches die Sendung zur Aufzeichnung vorgesehen hatte, eine Adressierungsinformation auf die gemeinsame oder die separate Kopie hinterlegt, etwa ein Dateiname oder sonstige Indexinformationen. Ein solcher nutzerbezogener Eintrag kann in Form von Metadaten weitere Informationen zur Sendung enthalten, etwa ein Verfallsdatum oder die Positionen etwaiger Werbeblöcke, um das Über-springen derselben zu ermöglichen.

Falls eine Aufteilung in zentrale und lokale Aufzeichnungsdaten erfolgt, werden die lokalen Daten entsprechend an alle Endgeräte 104 gesendet, an welchen die Sendung zur Aufnahme programmiert wurde. Das Aufteilen der Daten kann dabei so erfolgen, daß zumindest der zentrale Datenstrom für sich genommen kein dekodierbares Videosignal (Bild und Ton) mehr liefert. Erst wenn beide Datenmengen (aus dem Speicher 110 eines Endgeräts 104 und dem Massenspeicher 108) kombiniert werden, kann die Sendung vollständig wiedergegeben werden.

Eine Wiedergabe erfolgt, indem ein Nutzer mittels Nutzerschnittstelle 106 am Endgerät 104 das Archiv verfügbarer Sendungen anfordert, welches von der Datenbank 130 an das Endgerät 104 zur Darstellung mittels der Nutzerschnittstelle, beispielsweise auf dem Bildschirm 116, gesendet wird. Aus dem Archiv kann der Nutzer eine Aufzeichnung auswählen und durch entsprechende Eingabe die Wiedergabe starten. Das Endgerät sendet diese Anforderung an den PVR Server, welcher mittels der Datenbank 130 die entsprechenden Daten im Speicher 108 lokalisiert und diese als Video-Stream an das entsprechende Endgerät 104 sendet.

Falls eine Aufteilung in zentrale und lokale Aufzeichnungsdaten vorliegt, können die im Speicher 110 des auswählenden Endgeräts 104 und die im Massenspeicher 108 abgelegten Teile der Aufzeichnung im PVR Server 102 kombiniert werden. Hierzu werden zunächst die im Endgerät gespeicherten Daten an den PVR Server übertragen und dort kombiniert. Anschließend werden die komplettierten Videodaten zur Wiedergabe als Echtzeitdatenstrom an das Endgerät 104 gesendet.

Alternativ können die im Speicher 110 des auswählenden Endgeräts 104 und die im Massenspeicher 108 abgelegten Teile der Aufzeichnung in Echtzeit im Endgerät 104 kombiniert werden. Auf entsprechende Nutzereingabe hin werden die unvollständigen Videodaten mittels des PVR Servers 102 aus dem Massenspeicher 108 als Nahe-Echtzeitdatenstrom an das Endgerät 104 gesendet, dort um die im Endgerät 104 gespeicherten Daten ergänzt und wiedergegeben. Nahe-Echtzeitdatenstrom bedeutet dabei, daß je nach Art der gewählten Aufteilung der Daten zwischen lokalem Speicher 110 und Massenspeicher 108 sich auch größere Datenmengen im lokalen Speicher befinden können, etwa Intro-Sequenzen, die zunächst abgespielt werden, bevor die bis dahin gegebenenfalls gepufferten Daten aus dem Massenspeicher 108 zur Wiedergabe aufbereitet werden.

Eine zweite Datenbank 132, die auch in einer einheitlichen Datenbank gemeinsam mit der ersten Datenbank 130 realisiert sein kann, speichert für jeden Nutzer eine Liste weiterer Nutzer, die entweder generell alle von diesem Nutzer aufgezeichneten Sendungen oder speziell die durch den jeweiligen Nutzer freigegebene Sendungen wiedergeben dürfen. Dazu wird in der zweiten Datenbank zu jedem Endgerät 104A eine Liste mit berechtigten Endgeräten 104B geführt. Sofern ferner eine Vergabe von Wiedergaberechten auf Basis einzelner Sendungen vorgesehen ist, kann in der ersten Datenbank 130 zu jeder Sendung ein vom Nutzer mittels Nutzerschnittstelle 106, befüllbares Datenfeld vorgesehen werden. Mit diesem Datenfeld kann eine Positivliste realisiert werden, d.h. nur Sendungen mit einem entsprechenden Eintrag in diesem Datenfeld werden auch anderen Nutzern zur Verfügung gestellt, oder es kann eine Negativliste vorgesehen sein, d.h. Sendungen mit einem entsprechenden Eintrag in diesem Datenfeld werden anderen Nutzern nicht zur Verfügung gestellt. Dabei kann ferner vorgesehen sein, eine Positiv- oder Negativliste je eingetragenem berechtigten Nutzer vorzuhalten, um Sendungen selektiv nur einzelnen Nutzern der in der Liste als prinzipiell berechtigt vermerkten Nutzer zugänglich oder nicht zugänglich zu machen, d.h. den verschiedenen Freunden oder Familienmitgliedern auch verschiedene Sendungen aus dem Archiv des Nutzers zur Verfügung zu stellen.

Hat ein Nutzer eines ersten Endgeräts 104A einen Nutzer eines zweiten Endgeräts 104B in den Kreis der berechtigten Nutzer aufgenommen, etwa mittels entsprechender Eingaben über seine Nutzerschnittstelle 106A, kann vorgesehen werden, daß die Sendungen im Archiv des ersten Nutzers auch automatisch im Archiv des zweiten Nutzers erscheinen, es sei denn dies wurde im Falle der Vergabe von Wiedergaberechten auf Basis einzelner Sendungen für einzelne Sendungen ausgeschlossen. Dabei kann eine Kennzeichnung, beispielsweise durch Farbe oder Menügestaltung, vorgesehen werden, die dem zweiten Nutzer anzeigt, daß es sich um Sendungen aus dem Archiv des ersten Nutzers handelt. Alternativ kann vorgesehen werden, daß der erste Nutzer eine spezielle Sendung an den zweiten Nutzer "schicken" muß, bevor sie in dessen Archiv erscheint. Erscheint eine Sendung im Archiv des zweiten Nutzers, kann diese mittels Endgerät 104B wiedergegeben werden, als wäre die Sendung durch den zweiten Nutzer zur Aufnahme vorgesehen worden (zusammenfassend dargestellt durch Schritt 5).

Falls eine Aufteilung in zentrale und lokale Aufzeichnungsdaten vorliegt, können die im Speicher 110A des ursprünglich die Sendung zur Aufnahme auswählenden Endgeräts 104A des ersten Nutzers und die im Massenspeicher 108 abgelegten Teile der Aufzeichnung im PVR Server 102 kombiniert werden. Hierzu werden zunächst die im Endgerät 104A des ersten Nutzers gespeicherten Daten an den PVR Server 102 übertragen und dort kombiniert. Anschließend werden die komplettierten Videodaten zur Wiedergabe als Echtzeitdatenstrom an das wiedergebende Endgerät 104B des zweiten Nutzers gesendet.

Alternativ können die im Speicher 110A des Endgeräts 104A des ersten Nutzers und die im Massenspeicher 108 abgelegten Teile der Aufzeichnung in Echtzeit im wiedergebenden Endgerät 104B des zweiten Nutzers kombiniert werden. Dazu werden die die Sendung betreffenden lokalen Daten vom Speicher 110A zum Speicher 110B übertragen, und zwar entweder mittels des PVR Servers unter Steuerung der Datenbanken 130 und 132, oder indem der erste Nutzer dem zweiten Nutzer einen Datenträger mit diesen Daten übergibt.

Anschließend werden die unvollständigen Videodaten mittels des PVR Servers 102 aus dem Massenspeicher 108 als Nahe-Echtzeitdatenstrom an das Endgerät 104B gesendet, dort um die nunmehr im Endgerät 104B gespeicherten Daten ergänzt und wiedergegeben.

Die Datenbank 132 kann dabei so ausgestaltet sein, daß alle nicht in der Datenbank 132 als berechtigt markierten Endgeräte 104N die Aufzeichnungen eines betreffenden Nutzers nicht wiedergeben dürfen. Dies kann beispielsweise so realisiert werden, daß in den von der Datenbank 130 in Zusammenwirken mit der Datenbank 132 gelieferten Archivdaten für das Endgerät 104N die Sendungen des Endgeräts 104A nicht enthalten.

Dargestellt durch gestrichelte Linie 140 wird auf die beschriebene Weise eine Benutzergruppe gebildet, die aus den Endgeräten 104A und 104B besteht, wobei zunächst nur das Endgerät 104B berechtigt ist, auf die Sendungen des Endgeräts 104A zuzugreifen, nicht jedoch umgekehrt. Es kann vorgesehen werden, die Zahl der Nutzer, mit denen ein beliebiger Nutzer Sendungen austauschen kann, zu begrenzen, etwa um urheberrechtlichen Anforderungen zu genügen. Beispielsweise kann festgelegt werden, daß jeder Nutzer seine Sendungen nur insgesamt sieben weiteren Nutzern zur Verfügung stellen darf, die wiederum die Sendungen dieses Nutzers nur ansehen dürfen, wobei andere Nutzungen ausgeschlossen werden, etwa das Kopieren auf Datenträger oder das Ablegen in einem dauerhaften zentralen Archiv.

Wird im Fall lokal gespeicherter Anteile an den Aufzeichnungsdaten die Weitergabe derselben per Datenträger ermöglicht, kann vorgesehen werden, daß die Zahl und die Art der anfertigbaren Kopien dieser lokal gespeicherten Anteile durch die zweite Datenbank 132 gesteuert wird. Beispielsweise kann vorgesehen werden, daß nur sieben Kopien auf Datenträger zulässig sind, die sich mit einem anderen Endgerät als dem anfertigenden Endgerät nutzen lassen. Der Nutzer kann durch Einwirken der Datenbank 132 gezwungen werden, konkret die Endgeräte zu spezifizieren, für die eine spezielle Kopie nutzbar sein soll, wobei der Einsatz der Kopie an anderen Endgeräten ohne Erfolg bleibt.

Diese Art der Weitergabe von Sendungen kann mit der beschriebenen netzbasierten Weitergabe der Kopien kombiniert werden, indem jede Weitergabe einer Sendung an einen Nutzer der Nutzergruppe die Zahl der anfertigbaren Kopien vermindert. Andersherum kann auch jede angefertigte Kopie die Weitergabe an Nutzer der Nutzergruppe verhindern, was vorzugsweise mittels der Positivliste steuerbar ist, in der für eine bereits so oft wie zulässig mittels Datenträger weitergegebene Sendung kein Eintrag mehr erstellbar ist.

Alternativ ist es möglich, nur eine der beiden Weitergabemöglichkeiten, d.h. netzgestützt oder mittels Datenträger, vorzusehen. Die Weitergabe mittels Datenträger ist dabei der für den Nutzer aufwendigere Weg, der sich jedoch funktional dem gleichsteht, was mit den Aufzeichnungen analoger Bandgeräte praktiziert werden kann und damit ggf. besser mit dem jeweils geltenden Recht vereinbar ist. Die netzgestützte Weitergabe hingegen ist ein Zusatznutzen für den Nutzer, der als Dienstmerkmal einerseits die Wettbewerbsposition eines Betreibers eines Netzwerk-PVR verbessern und andererseits das Erheben besonderer Entgelte durch den Betreiber begründen kann.

In einer weiteren Alternative kann vorgesehen werden, daß vom ersten Nutzer an den zweiten Nutzer beispielsweise eine email gesendet wird, welche Informationen, etwa in Form eines Links, enthält, mit der am Endgerät des zweiten Nutzers eine durch diese Informationen referenzierte Sendung wiedergegeben werden kann. Liegt die Aufzeichnung vollständig im Speicher 108 des PVR Servers 102 vor, kann die Wiedergabe der referenzierten Sendung unmittelbar erfolgen. Ist hingegen ein Teil der Daten im Endgerätespeicher 110A des ersten Nutzers hinterlegt, wird dieser Teil der Daten entweder in die email eingebettet oder vor Beginn der Wiedergabe aus dem Endgerätespeicher 110A des ersten Nutzers abgerufen.

## Patentansprüche

1. Anordnung (100) zum Speichern und Wiedergeben von TV-Sendungen, welche folgendes aufweist:
- einen PVR Server (102) mit Mitteln zum Empfang einer Vielzahl digital kodierter TV-Kanäle, Mitteln zum Versorgen einer Vielzahl von Endgeräten (104) sowie Mitteln zum Aufzeichnen zu speichernder TV-Sendungen;
- eine Vielzahl von Endgeräten (104) mit Mitteln zum Auswählen zu speichernder TV-Sendungen (106) und Mitteln zum Übertragen der Auswahl an den PVR Server;
wobei ferner folgendes vorgesehen ist:
- eine erste Datenbank (130), in der für jedes Endgerät (104) ein Index der ansprechend auf eine an diesem Endgerät (104) getroffene Auswahl durch den PVR Server (102) gespeicherten TV-Sendungen gespeichert ist, wobei die erste Datenbank (130) die Zulassung oder Verweigerung der Wiedergabe gespeicherter Sendungen auf den Endgeräten (104) steuert; und
- eine zweite Datenbank (132), in der für ein erstes Endgerät (104A) weitere Endgeräte (104B) vermerkt sind, welche die Berechtigung haben, durch einen Nutzer des ersten Endgeräts (104A) ausgewählte oder alle durch den Index der ersten Datenbank (130) dem ersten Endgerät (104A) zugeordneten TV-Sendungen wiederzugeben, wobei nicht in der zweiten Datenbank vermerkte Endgeräte (104N) diese Berechtigung nicht haben.

2. Anordnung nach Anspruch 1, bei der die das erste Endgerät (104A) betreffenden Einträge in der zweiten Datenbank durch einen Nutzer des ersten Endgeräts (104A) bearbeitbar sind.

3. Anordnung nach einem der Ansprüche 1 oder 2, bei der die erste Datenbank (130) und die zweite Datenbank (132) in einer gemeinsamen Nutzerdatenbank zusammengefaßt sind.

4. Anordnung nach einem der Ansprüche 1 bis 3, bei der die Aufzeichnungsmittel des PVR Servers so gestaltet sind, daß ein Teil der bei der Aufzeichnung zu speichernden Daten an einen Speicher (110) des auswählenden Endgeräts (104) gesendet wird und ein Teil der zu speichernden Daten in einem mit dem PVR Server (102) gekoppelten Massenspeicher (108) abgelegt wird.

5. Anordnung nach Anspruch 4, bei der Mittel vorgesehen sind zum Übertragen des im ersten Endgerät (104A) gespeicherten Teils der Daten einer TV-Sendung an die berechtigten weiteren Endgeräte (104B), so daß die Wiedergabe der TV-Sendung durch die berechtigten weiteren Endgeräte (104B) möglich wird.

6. Anordnung nach einem der Ansprüche 4 oder 5, bei der die Endgeräte (104) Mittel aufweisen zum Kopieren des im ersten Endgerät (104A) gespeicherten Teils der Daten einer TV-Sendung auf einen Datenträger, der durch die weiteren Endgeräte (104B, 104N) einlesbar ist, so daß die Wiedergabe der TV-Sendung durch die weiteren Endgeräte (104B, 104N) möglich wird, wobei durch die zweite Datenbank (132) zusätzlich oder anstelle der Berechtigungen zum Wiedergeben von TV-Sendungen die Zahl der mittels der Kopiermittel erstellten Kopien vermerkt und beschränkt wird.

7. Verfahren zum Speichern und Wiedergeben von TV-Sendungen, mit folgenden Schritten:
- Empfangen einer Vielzahl digital kodierter TV-Kanäle durch einen PVR Server (102), der eine Vielzahl von Endgeräten (104) versorgt und zu speichernde TV-Sendungen aufzeichnet;
- Auswählen zu speichernder TV-Sendungen durch ein Endgerät (104) und Übertragen der Auswahl an den PVR Server (102);
- Speichern eines Index für jedes Endgerät (104) der ansprechend auf eine an diesem Endgerät (104) getroffene Auswahl durch den PVR Server (102) gespeicherten TV-Sendungen in einer ersten Datenbank(130), wobei die erste Datenbank (130) die Zulassung oder Verweigerung der Wiedergabe gespeicherter Sendungen auf den Endgeräten (104) steuert; und
- Vermerken weiterer Endgeräte (104B) zu einem ersten Endgerät (104A) in einer zweiten Datenbank, wobei die weiteren Endgeräte (104B) die Berechtigung haben, durch einen Nutzer des ersten Endgeräts (104A) ausgewählte oder alle durch den Index der ersten Datenbank (130) dem ersten Endgerät (104A) zugeordneten TV-Sendungen wiederzugeben und wobei nicht in der zweiten Datenbank vermerkte Endgeräte (104N) diese Berechtigung nicht haben.

8. Verfahren nach Anspruch 7, demgemäß die ein Endgerät (104A) betreffenden Einträge in der zweiten Datenbank durch einen Nutzer des ersten Endgeräts (104A) bearbeitbar sind.

9. Verfahren nach einem der Ansprüche 7 oder 8, bei dem die erste Datenbank (130) und die zweite Datenbank (132) in einer gemeinsamen Nutzerdatenbank zusammengefaßt sind.

10. Verfahren nach einem der Ansprüche 7 bis 9, demgemäß bei der Aufzeichnung durch den PVR Servers ein Teil der bei der Aufzeichnung zu speichernden Daten an einen Speicher (110) des auswählenden Endgeräts (104) gesendet wird und ein Teil der zu speichernden Daten in einem mit dem PVR Server (102) gekoppelten Massenspeicher (108) abgelegt wird.

11. Verfahren nach Anspruch 10, demgemäß der im ersten Endgerät (104A) gespeicherten Teil der Daten einer TV-Sendung an die berechtigten weiteren Endgeräte (104B) übertragen wird, so daß die Wiedergabe der TV-Sendung durch die berechtigten weiteren Endgeräte (104B) möglich wird.

12. Verfahren nach einem der Ansprüche 10 oder 11, demgemäß durch die Endgeräte (104) Kopien des im ersten Endgerät (104A) gespeicherten Teils der Daten einer TV-Sendung auf einem Datenträger erstellbar sind, wobei der Datenträger der durch die weiteren Endgeräte (104B, 104N) einlesbar ist, so daß die Wiedergabe der TV-Sendung durch die weiteren Endgeräte (104B, 104N) möglich wird, wobei durch die zweite Datenbank (132) zusätzlich oder anstelle der Berechtigungen zum Wiedergeben von TV-Sendungen die Zahl der mittels der Kopiermittel erstellten Kopien vermerkt und beschränkt wird.

## Claims

1. Arrangement (100) for storing and playing back TV programmes that has the following:
- a PVR server (102) having means for receiving a multiplicity of digitally coded TV channels, means for serving a multiplicity of terminals (104) and means for recording TV programmes that are to be stored;
- a multiplicity of terminals (104) having means for selecting TV programmes (106) that are to be stored and means for transferring the selection to the PVR server;
wherein also the following is provided:
- a first database (130) that stores, for each terminal (104), an index of the TV programmes stored by the PVR server (102) in response to a selection made on this terminal (104), wherein the first database (130) controls the approval or denial of the playback of stored programmes on the terminals (104); and
- a second database (132) that notes, for a first terminal (104A), further terminals (104B) that have the authorization to play back TV programmes selected by a user of the first terminal (104A) or all TV programmes associated with the first terminal (104A) by the index from the first database (130), wherein terminals (104N) that are not noted in the second database do not have this authorization.

2. Arrangement according to Claim 1, in which the entries in the second database that relate to the first terminal (104A) can be edited by a user of the first terminal (104A).

3. Arrangement according to either of Claims 1 and 2, in which the first database (130) and the second database (132) are combined in a shared user database.

4. Arrangement according to one of Claims 1 to 3, in which the recording means of the PVR server are in a form such that a portion of the data that are to be stored during the recording is sent to a memory (110) of the selecting terminal (104) and a portion of the data that are to be stored is stored in a mass memory (108) that is coupled to the PVR server (102).

5. Arrangement according to Claim 4, in which means are provided for transferring that portion of the data of a TV programme that is stored in the first terminal (104A) to the authorized further terminals (104B), so that playback of the TV programme by the authorized further terminals (104B) becomes possible.

6. Arrangement according to either of Claims 4 and 5, in which the terminals (104) have means for copying that portion of the data of a TV programme that is stored in the first terminal (104A) to a data storage medium that can be read in by the further terminals (104B, 104N), so that playback of the TV programme by the further terminals (104B, 104N) becomes possible, wherein the second database (132) notes and limits the number of copies made by means of the copying means in addition to or instead of the authorizations for playback of TV programmes.

7. Method for storing and playing back TV programmes, having the following steps:
- a multiplicity of digitally coded TV channels are received by a PVR server (102) that serves a multiplicity of terminals (104) and records TV programmes that are to be stored;
- TV programmes that are to be stored are selected by a terminal (104), and the selection is transferred to the PVR server (102);
- for each terminal (104), an index of the TV programmes stored by the PVR server (102) in response to a selection made on this terminal (104) is stored in a first database (130), wherein the first database (130) controls the approval or denial of the playback of stored programmes on the terminals (104); and
- further terminals (104B) are noted for a first terminal (104A) in a second database, wherein the further terminals (104B) have the authorization to play back TV programmes selected by a user of the first terminal (104A) or all TV programmes associated with the first terminal (104A) by the index from the first database (130) and wherein terminals (104N) that are not noted in the second database do not have this authorization.

8. Method according to Claim 7, according to which the entries in the second database that relate to a terminal (104A) can be edited by a user of the first terminal (104A).

9. Method according to either of Claims 7 and 8, in which the first database (130) and the second database (132) are combined in a shared user database.

10. Method according to one of Claims 7 to 9, according to which the recording by the PVR server involves a portion of the data that are to be stored during the recording being sent to a memory (110) of the selecting terminal (104) and a portion of the data that are to be stored being stored in a mass memory (108) that is coupled to the PVR server (102).

11. Method according to Claim 10, according to which that portion of the data of a TV programme that is stored in the first terminal (104A) is transferred to the authorized further terminals (104B), so that playback of the TV programme by the authorized further terminals (104B) becomes possible.

12. Method according to either of Claims 10 and 11, according to which the terminals (104) can make copies of that portion of the data of a TV programme that is stored in the first terminal (104A) on a data storage medium, wherein the data storage medium can be read in by the further terminals (104B, 104N), so that playback of the TV programme by the further terminals (104B, 104N) becomes possible, wherein the second database (132) notes and limits the number of copies made by means of the copying means in addition to or instead of the authorizations for playback of TV programmes.

## Revendications

1. Système (100) pour sauvegarder et reproduire des émissions TV, comportant :
- un serveur PVR (102) comportant des moyens pour recevoir une pluralité de canaux TV codés numériquement, des moyens pour desservir une pluralité de terminaux (104) ainsi que des moyens pour enregistrer des émissions TV à sauvegarder ;
- une pluralité de terminaux (104) comportant des moyens pour sélectionner des émissions TV à sauvegarder (106) et des moyens pour transmettre la sélection au serveur PVR ;
dans lequel sont en outre prévues :
- une première base de données (130) dans laquelle est sauvegardé, pour chaque terminal (104), un index des émissions TV sauvegardées par le serveur PVR (102) en réponse à une sélection effectuée sur ce terminal (104), la première base de données (130) commandant l'autorisation ou le refus de la reproduction d'émissions sauvegardées sur les terminaux (104) ; et
- une deuxième base de données (132) dans laquelle sont notés, pour un premier terminal (104A), d'autres terminaux (104B) qui ont l'autorisation de reproduire des émissions TV sélectionnées par un utilisateur du premier terminal (104A) ou toutes les émissions TV associées au premier terminal (104A) par l'index de la première base de données (130), des terminaux (104N) non notés dans la deuxième base de données n'ayant pas cette autorisation.

2. Système selon la revendication 1, selon lequel les entrées concernant le premier terminal (104A) peuvent être traitées dans la deuxième base de données par un utilisateur du premier terminal (104A).

3. Système selon l'une des revendications 1 ou 2, selon lequel la première base de données (130) et la deuxième base de données (132) sont regroupées dans une base commune de données d'utilisateurs.

4. Système selon l'une des revendications 1 à 3, selon lequel les moyens d'enregistrement du serveur PVR sont conçus de manière telle qu'une partie des données à sauvegarder lors de l'enregistrement est envoyée à une mémoire (110) du terminal sélectionneur (104) et qu'une partie des données à sauvegarder est déposée dans une mémoire de masse (108) couplée au serveur PVR (102).

5. Système selon la revendication 4, selon lequel sont prévus des moyens pour transmettre la partie, sauvegardée dans le premier terminal (104A), des données d'une émission TV aux autres terminaux autorisés (104B), de sorte que la reproduction de l'émission TV par les autres terminaux autorisés (104B) est rendue possible.

6. Système selon l'une des revendications 4 ou 5, selon lequel les terminaux (104) comportent des moyens pour copier la partie, sauvegardée dans le premier terminal (104A), des données d'une émission TV sur un support de données qui peut être lu par les autres terminaux (104B, 104N), de sorte que la reproduction de l'émission TV par les autres terminaux (104B, 104N) est rendue possible, le nombre de copies créées à l'aide de moyens de copie étant noté et limité par la deuxième base de données (132) en plus ou au lieu des autorisations de reproduction d'émissions TV.

7. Procédé pour sauvegarder et reproduire des émissions TV, comportant les étapes suivantes :
- réception d'une pluralité de canaux TV codés numériquement par un serveur PVR (102) qui dessert une pluralité de terminaux (104) et enregistre des émissions TV à sauvegarder ;
- sélection, par un terminal (104), d'émissions TV à sauvegarder et transmission de la sélection au serveur PVR (102) ;
- sauvegarde, dans une première base de données pour chaque terminal (104), d'un index des émissions TV sauvegardées par le serveur PVR (102) en réponse à une sélection effectuée sur ce terminal (104), la première base de données (130) commandant l'autorisation ou le refus de la reproduction d'émissions sauvegardées sur les terminaux (104) ; et
- inscription, pour un premier terminal (104A), d'autres terminaux (104B) dans une deuxième base de données, les autres terminaux (104B) ayant l'autorisation de reproduire des émissions TV sélectionnées par un utilisateur du premier terminal (104A) ou toutes les émissions TV associées au premier terminal (104A) par l'index de la première base de données (130), et des terminaux (104N) non notés dans la deuxième base de données n'ayant pas cette autorisation.

8. Procédé selon la revendication 7, selon lequel les entrées concernant un terminal (104A) peuvent être traitées dans la deuxième base de données par un utilisateur du premier terminal (104A).

9. Procédé selon l'une des revendications 7 ou 8, selon lequel la première base de données (130) et la deuxième base de données (132) sont regroupées dans une base commune de données d'utilisateurs.

10. Procédé selon l'une des revendications 7 à 9, selon lequel, lors de l'enregistrement par le serveur PVR, une partie des données à sauvegarder lors de l'enregistrement est envoyée à une mémoire (110) du terminal sélectionneur (104) et une partie des données à sauvegarder est déposée dans une mémoire de masse (108) couplée au serveur PVR (102).

11. Procédé selon la revendication 10, selon lequel la partie, sauvegardée dans le premier terminal (104A), des données d'une émission TV est transmise aux autres terminaux autorisés (104B), de sorte que la reproduction de l'émission TV par les autres terminaux autorisés (104B) est rendue possible.

12. Procédé selon l'une des revendications 10 ou 11, selon lequel les terminaux (104) peuvent créer, sur un support de données, des copies de la partie, sauvegardée dans le premier terminal (104A), des données d'une émission TV, le support de données pouvant être lu par les autres terminaux (104B, 104N), de sorte que la reproduction de l'émission TV par les autres terminaux (104B, 104N) est rendue possible, le nombre de copies créées à l'aide de moyens de copie étant noté et limité par la deuxième base de données (132) en plus ou au lieu des autorisations de reproduction d'émissions TV.
